# FASCICULE DE BREVET EUROPEEN

(11) **EP 2 871 929 B1**
(45) Date de publication et mention de la délivrance du brevet: **14.09.2016**
(21) Numéro de dépôt: 13756553.7
(22) Date de dépôt: 09.07.2013
(51) Int. Cl.: B02C 18/14, A01F 29/00

(54) **MACHINE DE DISTRIBUTION**
VERTEILMASCHINE
DISTRIBUTING MACHINE

(30) Priorité: 12.07.2012 FR 1256742
(43) Date de publication de la demande: 20.05.2015
(73) Titulaire: Kuhn-Audureau S.A., 85260 La Copechagnière (FR)
(72) Inventeur: ROGER, Christophe, 85000 La Roche sur Yon (FR); GARNIER, Charly, 85660 Saint Philibert De Bouaine (FR)
(74) Mandataire: Esch, Esther Evelyne
(86) Numéro de dépôt international: PCT/FR2013/051636
(87) Numéro de publication internationale: WO 2014/009650

(56) Documents cités:
- EP-A1- 2 436 261
- EP-A2- 0 568 961
- DE-U1- 8 813 158
- FR-A1- 2 598 059
- FR-A1- 2 741 777
- GB-A- 2 261 615

## Description

La présente invention se rapporte à une machine de distribution de produits pour l'alimentation ou la formation de litière pour les animaux, comportant une benne avec une ouverture pour le passage des produits vers un carter comportant une première paroi percée de l'ouverture et une deuxième paroi entre lesquelles est montée une turbine pouvant tourner autour d'un axe de rotation, la turbine comportant un disque avec des rangées de couteaux et des pales orientées suivant une direction sensiblement radiale du disque et s'étendant chacune depuis le disque jusqu'à une face frontale respective voisine de l'ouverture, au moins une rangée de couteaux s'étendant entre le disque et la face frontale d'une pale et étant disposée en prolongement de cette pale, ladite au moins une rangée de couteaux comportant un premier couteau voisin de la face frontale et un dernier couteau voisin du disque, au moins un premier couteau supplémentaire étant disposé entre la face frontale d'une pale et la première paroi du carter, la turbine comportant au moins une branche comportant la face frontale d'une pale.

Sur une telle machine, les produits, tels que de la paille ou du foin, sont introduits dans la benne et déplacés en direction de l'ouverture au moyen, par exemple, d'un tapis mobile situé dans le fond de la benne. Les produits rencontrent un tambour démêleur permettant une alimentation homogène de la turbine et un flux régulier de produits vers celle-ci. Les produits passent ensuite à travers l'ouverture, d'où ils entrent dans le carter dans lequel la turbine tourne à grande vitesse. Sous l'effet de cette rotation, les produits sont déplacés vers une périphérie de la turbine en glissant le long des pales et sont hachés par l'action des couteaux coopérant avec un ou plusieurs contre-couteaux répartis le long du pourtour du carter. Par l'effet de soufflerie dû notamment aux pales, les produits hachés sont ensuite éjectés à travers une goulotte et dirigés vers le sol ou vers des auges par exemple.

Sur une machine connue du document FR 2 598 059 A1, les rangées de couteaux sont moins larges que les pales dans le prolongement desquelles les rangées sont disposées. Il en résulte notamment que le premier couteau de chaque rangée est disposé quelque peu en retrait de la face frontale de la pale correspondante. Ainsi, les produits glissant le long d'une pale, au voisinage de son arête proche de l'ouverture, sont centrifugés sans être recoupés ou bien ne sont pas recoupés en brins suffisamment courts. De plus, dans l'espace du carter compris entre la face frontale et la première paroi du carter, les produits ne sont pas ou mal hachés. Les produits non ou mal hachés augmentent la puissance consommée par la machine, le temps nécessaire pour travailler et éjecter les produits contenus dans la benne, ainsi que le risque de bourrage, en particulier lors de l'utilisation de produits denses et/ou humides et/ou à brins longs. En sus, les produits éjectés en dehors du carter sont hétérogènes. Un autre problème consiste en ce que les pales sont formées par de simples tôles planes perpendiculaires au disque qui, en sus, ne se rejoignent pas dans la partie centrale de la turbine. De fait, à la fois les pales et la turbine dans son ensemble manquent de rigidité.

Sur une autre machine connue du document DE 88 13 158 U1, la turbine comporte un premier disque voisin des produits et un deuxième disque parallèles entre eux. La turbine est montée sur un axe de rotation dans un carter circulaire dont le diamètre est à peine plus grand que celui du premier disque. Entre les faces internes de ces deux disques, au voisinage de leur périphérie, sont disposées des rangées de couteaux. Le premier disque porte sur sa face externe des couteaux qui déchiquettent les produits, par exemple sous forme d'une balle. Lorsque la turbine tourne, les produits déchiquetés se déplacent le long de la face externe du premier disque en direction de sa périphérie. Les produits déchiquetés et centrifugés passent dans l'espace annulaire séparant le carter du premier disque, pour être repris par les rangées de couteaux afin d'être hachés. L'alimentation des rangées de couteaux se fait donc à travers un passage étroit qui augmente considérablement le temps nécessaire pour hacher et éjecter les produits. De plus, cette alimentation se fait suivant une direction parallèle à l'axe de rotation de la turbine, d'où un hachage irrégulier le long des rangées de couteaux.

Sur une autre machine connue du document EP 2 436 261 A1, la turbine comporte un cylindre central creux autour duquel se répartissent des tôles planes de faible épaisseur liées audit cylindre. Ce cylindre creux et ces tôles planes s'étendent en projection perpendiculaire depuis le disque. Cette conception présente de nombreux creux et arêtes vives qui gênent l'écoulement des produits depuis le centre de la turbine en rotation vers sa périphérie. De plus, des produits peuvent aisément rester coincés dans ces aspérités géométriques. C'est notamment le cas au sein du cylindre creux, ou encore dans le creux en forme de V qui sépare deux tôles planes. Des accumulations de produits peuvent former un balourd qui déséquilibre la turbine en rotation.

Une autre machine connue du document EP 0 568 961 A2 est conforme au préambule de la revendication 1. Sur cette machine, la turbine comporte un disque principal traversé par un arbre de rotation et portant des rangées de couteaux s'étendant radialement et disposées en porte-à-faux du disque. Le disque principal porte des pales formées par des tôles planes sensiblement perpendiculaires au disque principal et par des branches en forme de tôles pliées. Chaque branche naît au niveau du disque et s'étend vers les couteaux en divergeant du disque et en suivant le contour de la tôle plane correspondante. Une telle pale est en elle-même peu rigide. Chaque branche est reliée au disque en une zone respective radialement distante de l'arbre de rotation. L'inclinaison de chaque pale par rapport à un rayon du disque principal est réglable par montage de la pale sur un axe parallèle à l'arbre de rotation, lequel axe est placé à proximité de la zone où la branche converge vers le disque principal. Ce mode de liaison des pales au disque principal ne permet pas aux pales de conférer un supplément de rigidité significatif au disque principal. L'ensemble disque principal et pales manque donc de rigidité. Un problème est donc que les efforts induits par les couteaux sur la turbine en rotation, notamment en raison de leur porte-à-faux par rapport au disque principal, entraînent d'importantes déformations de la turbine. Par ailleurs, la turbine porte un deuxième disque placé entre le disque principal et la benne, et lié de manière amovible à l'arbre de rotation. Ce deuxième disque est placé, suivant l'axe de rotation de la turbine, sensiblement au niveau de premiers couteaux supplémentaires que porte le disque principal. Ce deuxième disque porte des branches s'étendant radialement. Ce deuxième disque et ses branches portent des couteaux orientés vers la benne. Lorsque la turbine tourne, ces couteaux déchiquettent les produits présents dans la benne et une partie de ces produits est dirigée radialement vers les premiers couteaux supplémentaires. Toutefois, le deuxième disque réduit la section de passage des produits de la benne vers le disque principal, et représente un obstacle au déplacement desdits produits suivant l'axe de rotation. Il en résulte que seule une quantité réduite de produits atteint, sous l'effet de la force centrifuge, les couteaux du disque principal placés à proximité immédiate de celui-ci. De plus, des produits peuvent à la longue s'accumuler dans l'espace présent entre le disque principal et le deuxième disque. Ce deuxième disque peut néanmoins être retiré de sorte que la turbine fonctionne avec le seul disque principal. Dans ce cas toutefois, les produits en provenance de la benne et arrivant contre le disque principal sont centrifugés en grande partie en direction des couteaux proches du disque principal, tandis que les couteaux éloignés du disque principal, notamment les premiers couteaux supplémentaires, sont moins bien alimentés. Un problème avec cette machine est donc que les produits ne sont pas répartis de façon homogène sur la largeur des rangées de couteaux lorsque la turbine tourne, ce qui détériore la qualité du hachage.

La présente invention a pour but une machine qui ne présente pas les inconvénients précités.

A cet effet, l'invention est caractérisée par le fait que ladite au moins une branche de la turbine s'étend depuis une périphérie d'une plaque centrale voisine de l'ouverture, distante du disque et liée à la pale dont la face frontale appartient à ladite au moins une branche. Les produits franchissant l'ouverture du carter viennent en contact avec la plaque centrale dont la surface lisse et régulière évite les accumulations éventuelles de produits au centre de la turbine. En sus, cette plaque centrale permet à une partie des produits, sous l'effet de la force centrifuge, de glisser radialement, depuis l'axe de rotation, le long de la plaque centrale, puis le long de la branche en direction de l'espace situé entre la face frontale de cette branche et la première paroi du carter percée de l'ouverture. Lors d'une révolution de la turbine autour de son axe de rotation, cet espace est traversé par le au moins un premier couteau supplémentaire dont l'alimentation est améliorée par l'agencement de la branche selon l'invention. Les produits glissant le long de la branche, y compris ceux au niveau de la face frontale voisine de l'ouverture, sont entièrement hachés, et ceux présents dans l'espace du carter situé entre la face frontale de pale et la première paroi, sont également recoupés. Le reste des produits glisse le long de la plaque centrale et se déplace plus ou moins radialement au moins entre deux pales adjacentes jusqu'à être haché par les couteaux d'une rangée de couteaux. De cette manière, les produits glissant le long des pales sont bien recoupés. Les produits éjectés en dehors du carter sont plus homogènes. L'amélioration de la qualité de hachage réduit la puissance consommée par la machine, le temps nécessaire pour travailler et éjecter les produits contenus dans la benne, ainsi que le risque de bourrage, en particulier lors de l'utilisation de produits denses et/ou humides et/ou à brins longs. Enfin, cet agencement de la turbine avec une plaque centrale distante du disque et liée à la pale, et à partir de laquelle s'étend une branche portant la face frontale de cette pale, augmente la rigidité à la fois de ladite pale et de la turbine dans son ensemble.

Selon une caractéristique avantageuse de l'invention, ladite au moins une branche s'étend en direction dudit au moins un premier couteau supplémentaire. De cette manière, les produits glissant le long de cette branche en direction de la périphérie de la turbine, sont immédiatement hachés par ce premier couteau supplémentaire placé dans le prolongement de cette branche.

Selon une autre caractéristique avantageuse de l'invention, ledit au moins un premier couteau supplémentaire est placé, suivant l'axe de rotation, sensiblement dans le prolongement d'une rangée de couteaux. Les produits rencontrant une pale se répartissent en une première partie glissant le long de la branche de cette pale, et en une deuxième partie se déplaçant plus ou moins radialement entre cette pale et une pale adjacente. La première partie est hachée par le au moins un premier couteau supplémentaire, tandis que, simultanément, la deuxième partie est hachée par les couteaux de la rangée de couteaux dans le prolongement de laquelle le premier couteau supplémentaire est disposé. Le nombre de révolutions de la turbine nécessaire pour hacher l'ensemble des produits venant de la benne est ainsi réduit, les produits sont rapidement hachés.

D'autres caractéristiques et avantages de l'invention ressortiront de la description ci-après avec référence aux dessins annexés qui représentent un exemple non limitatif de réalisation de la machine selon l'invention.

Sur ces dessins :
- la figure 1 représente une vue de côté avec une coupe partielle d'une machine selon l'invention ;
- la figure 2 représente une vue de face du tambour démêleur ;
- la figure 3 représente une vue de détail d'un agencement, dans une première position, de la machine selon l'invention ;
- la figure 4 représente une vue de détail de l'agencement, dans une deuxième position, de la machine selon l'invention ;
- la figure 5 représente une vue en perspective du carter et de la turbine ;
- la figure 6 représente une vue en perspective de la turbine sans les couteaux ;
- la figure 7 représente une vue du carter et de la turbine, en coupe dans un plan passant par l'axe de rotation.

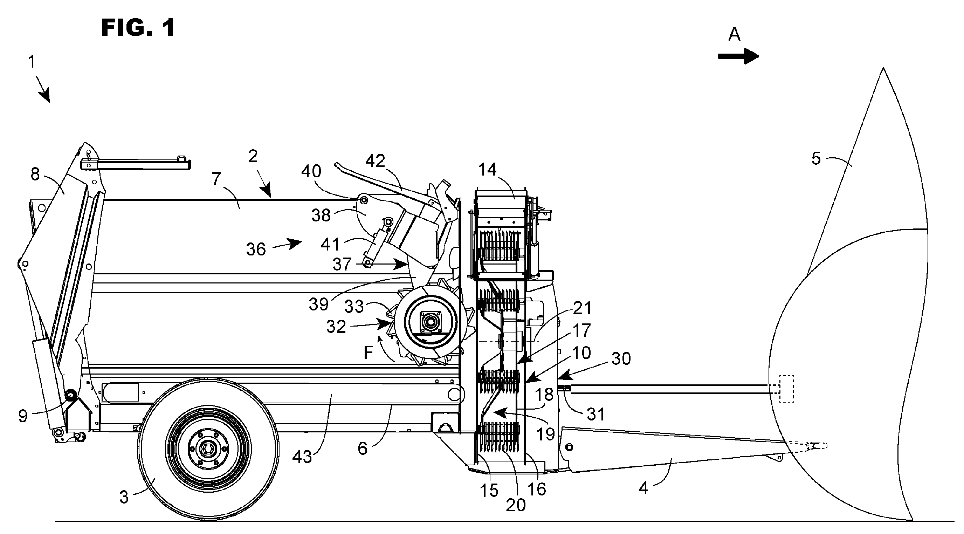

Telle qu'elle est représentée sur la figure 1, la machine (1) selon l'invention comporte une benne (2) avec deux roues porteuses (3) et un timon (4) pour l'accrochage à un tracteur (5) servant à animer la machine (1) et à la déplacer. La flèche (A) indique le sens de déplacement normal de la machine (1). Les indications "avant" et "arrière" sont données en fonction de ce sens de déplacement. La benne (2) est avantageusement déplaçable en hauteur par rapport aux roues porteuses (3). Cela permet de l'abaisser jusqu'au sol lors de son chargement et de la soulever pour les déplacements.

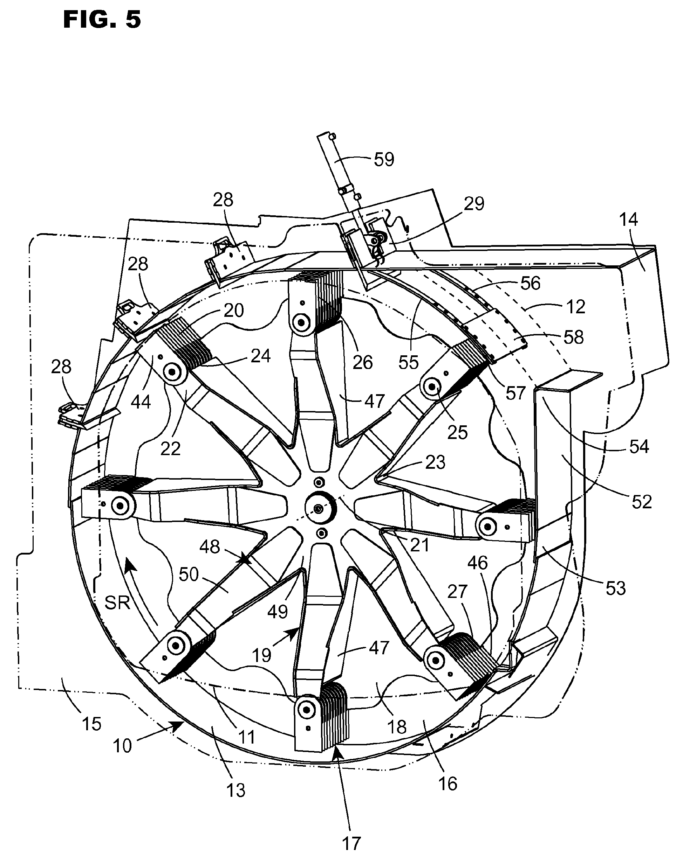

La benne (2) possède un fond (6) et deux parois latérales (7). Le côté arrière permet le chargement des produits dans la benne (2). Il peut être fermé au moyen d'un panneau (8) qui est articulé sur la benne (2) au moyen d'un axe (9), de manière à permettre de déplacer le panneau (8). Tel que cela ressort des figures 1 et 5, le côté avant de la benne (2) est constitué par un carter (10) possédant une ouverture (11) orientée vers l'intérieur de la benne (2) pour le passage des produits de la benne (2) vers le carter (10). Le carter (10) comporte également un orifice de sortie (12) sur son pourtour (13). Cet orifice de sortie (12) communique avec une goulotte d'éjection (14) orientable pour diriger le flux des produits. Le carter (10) est délimité notamment par une première paroi (15), adossée à la benne (2) et percée de ladite ouverture (11), et par une deuxième paroi (16), entre lesquelles est disposée une turbine (17).

Comme représenté sur la figure 5, la turbine (17) comporte un disque (18) avec des pales (19) et des couteaux (20). Le disque est lié à une pièce centrale telle qu'un arbre. Cette pièce centrale porte un axe de rotation (21) de la turbine autour duquel celle-ci est animée au travail. Cet axe de rotation (21) est de préférence sensiblement horizontal. Chaque pale (19) est orientée suivant une direction sensiblement radiale du disque (18). Chaque pale (19) s'étend depuis le disque (18) jusqu'à une face frontale (22) respective voisine de l'ouverture (11) du carter (10). Dans l'exemple de réalisation des figures, cette face frontale (22) est formée par une pièce de tôle s'étendant sensiblement parallèlement au disque (18). La face frontale (22) présente, vue depuis l'ouverture (11), une superficie importante qui lui assure une certaine rigidité apte à encaisser les efforts exercés par les couteaux (20). Au moins une pale (19) s'étend d'un côté intérieur (23) voisin de l'axe de rotation (21) jusqu'à un côté extérieur (24) voisin des couteaux (20) et reliant la face frontale (22) de cette pale (19) au disque (18). Dans l'exemple des figures, le côté extérieur (24) est plus long que le côté intérieur (23). La face frontale (22) est distante du disque (18) dudit côté extérieur (24). Dans l'exemple des figures, chaque pale (19) s'étend ainsi du côté intérieur (23) jusqu'au côté extérieur (24).

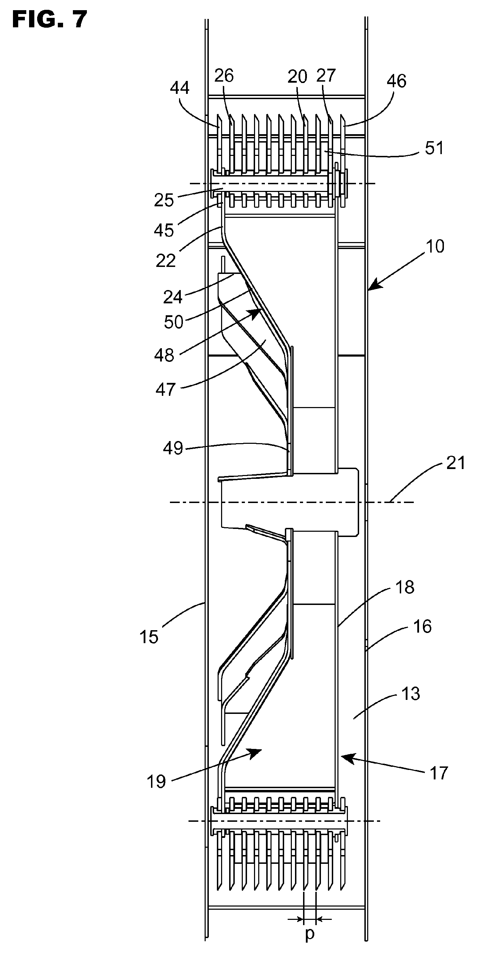

Au moins une partie des couteaux (20) de la turbine (17) est regroupée en rangées. Au sein de chaque rangée, les couteaux (20) sont séparés les uns des autres d'un certain pas (p). Ainsi que cela ressort notamment de la figure 7, ce pas (p) est de préférence sensiblement constant de façon à assurer un hachage régulier des produits. Au moins une rangée de couteaux (20) s'étend entre le disque (18) et la face frontale (22) d'une pale (19) et est disposée en prolongement de cette pale (19). Cette rangée de couteaux (20) est montée à pivotement sur un axe de fixation (25) lié au disque (18) et disposé en prolongement de la pale (19). Ainsi, en cas de rencontre avec un corps dur étranger tel qu'une pierre, les couteaux (20) peuvent s'escamoter par pivotement autour de l'axe de fixation (25) sans être endommagés. Ladite au moins une rangée de couteaux (20) comporte un premier couteau (26) voisin de la face frontale (22) et un dernier couteau (27) voisin du disque (18). Les différents couteaux (20, 26, 27) ont de préférence la forme d'un rectangle de grandes dimensions et sont sensiblement parallèles entre eux. Ils comportent une ou plusieurs arêtes tranchantes. Lors de la rotation de la turbine (17), les couteaux (20, 26, 27) coopèrent avec des contre-couteaux (28, 29) disposés sur le pourtour du carter et visibles sur la figure 5. Les contre-couteaux (28, 29) ont de préférence la forme de palettes orientées sensiblement perpendiculairement à un plan de rotation de la turbine (17) et s'étendant de la première paroi (15) jusqu'à la deuxième paroi (16) du carter (10). De préférence, la machine comporte trois contre-couteaux fixes (28) et un contre-couteau réglable (29) placé, vu dans le sens de rotation (SR) de la turbine (17), entre le dernier contre-couteau fixe (28) et l'orifice de sortie (12).

Dans l'exemple de réalisation des figures, chaque rangée de couteaux (20) s'étend entre le disque (18) et la face frontale (22) d'une pale (19) respective et est disposée en prolongement de cette pale (19) respective. De plus, chaque rangée de couteaux (20) comporte un premier couteau (26) voisin de la face frontale (22) respective et un dernier couteau (27) voisin du disque (18). Chaque rangée de couteaux (20) est montée sur un axe de fixation (25) respectif lié au disque (18) et disposé en prolongement d'une pale (19) respective.

A l'avant du carter (10) est monté un boîtier de distribution (30) représenté sur la figure 1. Celui-ci comporte une entrée (31) qui peut être reliée à un arbre de prise de force du tracteur (5), à l'aide d'un arbre intermédiaire. L'arbre de la turbine (17) est relié à une première sortie dudit boîtier (30).

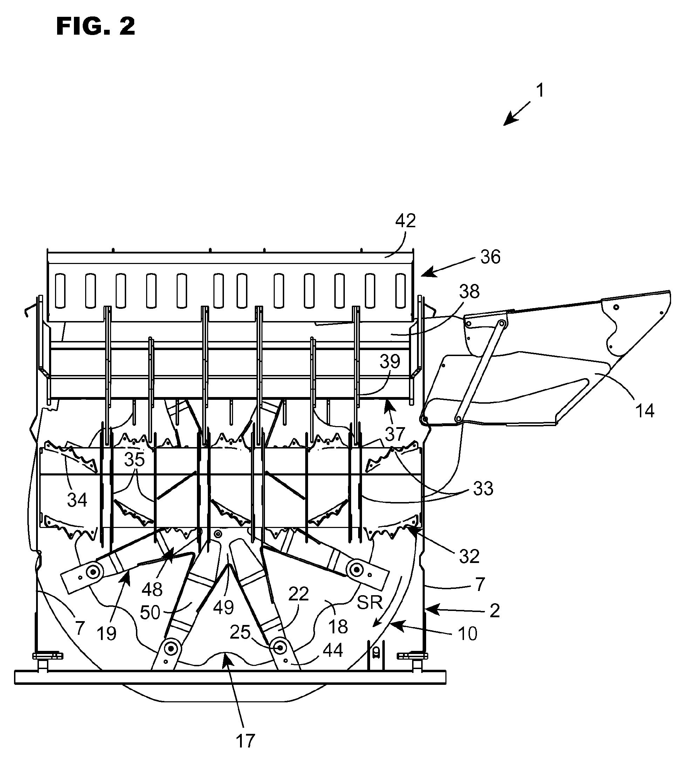

Devant l'ouverture (11) du carter (10) est disposé un tambour démêleur (32) muni de couteaux (33). Le tambour démêleur (32) se situe ainsi entre les produits chargés dans la benne (2) et la turbine (17). Le tambour démêleur (32) est monté entre les parois latérales (7) de la benne (2). A ses extrémités, il est guidé dans des paliers fixés auxdites parois latérales (7), de manière à pouvoir tourner autour d'un axe géométrique longitudinal. Le tambour démêleur (32) est entraîné en rotation, par exemple à l'aide de moyens de transmission qui le relient à une deuxième sortie du boîtier de distribution (30), ou bien à l'aide d'un moteur hydraulique. Ainsi que cela ressort de la figure 2, le tambour démêleur (32) comporte sur sa périphérie des segments de spires (34). Le sens d'enroulement de chacun de ces segments (34) peut être inversé par rapport à celui du ou des segments (34) voisins. Il est également possible d'inverser le sens d'enroulement du ou des segments (34) situés sur une moitié de la longueur du tambour démêleur (32) par rapport à celui du ou des segments (34) situés sur l'autre moitié de la longueur du tambour démêleur (32). Les segments de spires (34) comportent des sections droites (35) qui sont dirigées dans le sens de rotation (F) du tambour démêleur (32). Des couteaux (33) sont avantageusement fixés sur ces sections droites (35).

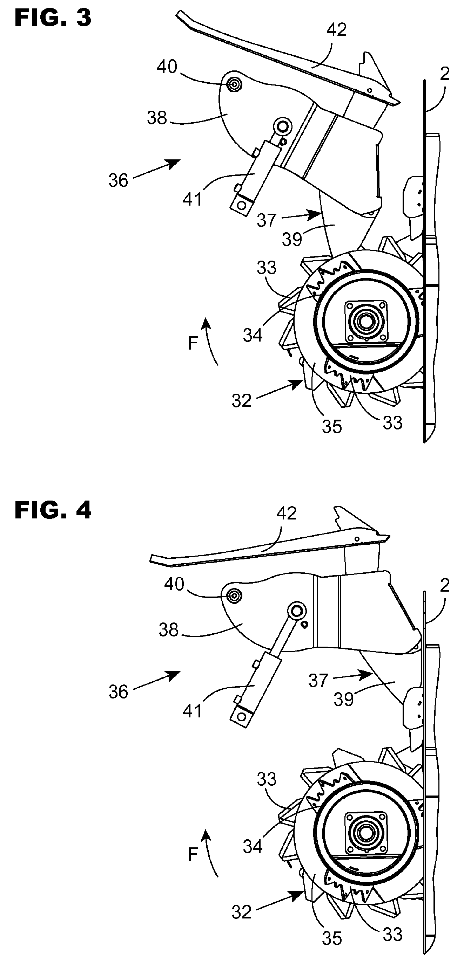

Au-dessus du tambour démêleur (32) se trouve un dispositif de régulation (36) comportant des organes de retenue (37) et une paroi déflectrice (38). Dans l'exemple représenté, ces organes de retenue (37) sont constitués par plusieurs plaques (39) sensiblement parallèles aux parois latérales (7). Ils sont fixés sur la paroi déflectrice (38) qui est déplaçable par rapport au tambour démêleur (32), dans au moins deux positions différentes. Dans une première position, qui est représentée sur la figure 3, la paroi déflectrice (38) est rapprochée du tambour démêleur (32). La section du passage entre la paroi déflectrice (38) et le tambour démêleur (32) est ainsi beaucoup plus grande à son extrémité arrière qu'à son extrémité avant. Dans une deuxième position, qui est représentée sur la figure 4, la paroi déflectrice (38) est éloignée du tambour démêleur (32). Le passage entre la paroi déflectrice (38) et le tambour démêleur (32) présente ainsi une grande section sensiblement constante entre son extrémité arrière et son extrémité avant.

La paroi déflectrice (38), qui porte les organes de retenue (37), est articulée, à son extrémité arrière, sur un axe (40) sensiblement horizontal solidaire des parois latérales (7) de la benne (2). La paroi déflectrice (38) est déplaçable autour dudit axe (40) au moyen d'un système de réglage (41). Ce système de réglage peut être par exemple un vérin hydraulique, qui est lié d'une part à la paroi déflectrice (38) elle-même et, d'autre part, à une paroi latérale (7) de la benne (2). Ce vérin est relié au moyen de conduits au dispositif hydraulique du tracteur (5) et peut être commandé, de sorte qu'il s'ouvre ou se ferme, depuis ce dernier. Il permet ainsi de déplacer ladite paroi déflectrice (38) dans les positions décrites précédemment.

Un écran (42) est articulé sur la paroi déflectrice (38) et prolonge ladite paroi (38) en direction des produits contenus dans la benne (2). L'écran (42) se déplace lorsque la paroi déflectrice (38) est déplacée dans ses différentes positions de travail.

Dans la première position de la paroi déflectrice (38), chaque organe de retenue (37) se situe au-dessus de la moitié arrière du tambour démêleur (32) et s'étend jusque dans la trajectoire des couteaux (33). L'écran (42) est rapproché des produits contenus dans la benne (2).

Dans la deuxième position de la paroi déflectrice (38), chaque organe de retenue (37) se situe au-dessus de la moitié avant du tambour démêleur (32) et s'étend à une certaine distance au-dessus de la trajectoire des couteaux (33). L'écran (42) est davantage éloigné des produits contenus dans la benne (2).

Sur le fond (6) de la benne (2) est disposé un tapis de déplacement (43) des produits. Ce tapis (43) est constitué par une bande transporteuse qui est animée de sorte qu'elle amène les produits contenus dans la benne (2) au tambour démêleur (32).

Les produits entraînés par le tambour démêleur (32) franchissent l'ouverture (11) du carter (10) et arrivent sensiblement au centre de la turbine (17) en rotation. Ils glissent alors le long des pales (19) et sur le disque (18), en direction du pourtour (13) du carter (10) où ils sont freinés et faiblement hachés par les trois contre-couteaux fixes (28) coopérant avec les couteaux (20, 26, 27) de la turbine (17). De cette manière, les produits présents le long du pourtour (13) sont ralentis à proximité des contre-couteaux fixes (28). Au cours de leur trajet le long du pourtour (13) du carter (10), les produits sont accélérés par l'effet des pales (19) et des couteaux (20, 26, 27) de la turbine (17). Au niveau du contre-couteau réglable (29), les produits sont d'autant plus fortement freinés que le contre-couteau réglable (29) est plus proche de la trajectoire des couteaux (20, 26, 27) autour de l'axe de rotation (21). L'intensité du hachage peut ainsi être ajustée en faisant varier la distance entre les couteaux (20, 26, 27) et ledit contre-couteau réglable (29). Les produits ainsi hachés sont ensuite éjectés à travers l'orifice de sortie (12) vers la goulotte d'éjection (14), par l'effet de soufflerie dû notamment aux pales (19).

Un espace d'une certaine largeur doit être respecté entre la face frontale (22) des pales (19) et la première paroi (15) du carter (10), de manière à limiter la consommation de puissance de la machine (1) par retenue voire bourrage de produits dans cet espace, et à empêcher un corps étranger de petite taille tel qu'un caillou de venir se coincer dans cet espace. Au moins un premier couteau supplémentaire (44) est disposé entre la face frontale (22) d'une pale (19) et la première paroi (15) du carter (10). Ce au moins un premier couteau supplémentaire (44) est placé à une distance de la première paroi (15) sensiblement égale au pas (p) entre les différents couteaux (20, 26, 27). Cette caractéristique apparaît notamment sur la figure 7. Ainsi, dans ledit espace, les produits sont également hachés et ne peuvent s'accumuler. La taille des produits éjectés par la goulotte (14) est plus homogène. Il ressort notamment de la figure 5 que la turbine (17) comporte une pluralité de premiers couteaux supplémentaires (44). Chacun d'eux est placé à une distance de la première paroi (15) sensiblement égale au pas (p).

De préférence, le au moins un premier couteau supplémentaire (44), notamment chaque premier couteau supplémentaire (44), est monté à pivotement sur l'axe de fixation (25) correspondant. Ce au moins un premier couteau supplémentaire (44), notamment chaque premier couteau supplémentaire (44), peut donc, à l'instar des autres couteaux (20, 26, 27), s'escamoter par pivotement autour de l'axe de fixation (25) lorsqu'il rencontre un obstacle.

De préférence, la face frontale (22) d'une pale (19) comporte à une extrémité distante de l'axe de rotation (21), une tôle sommet (45) portant l'axe de fixation (25). L'axe de fixation (25) est donc supporté par le disque (18) et par ladite tôle sommet (45). Un tel montage est d'une grande robustesse et autorise l'emploi de couteaux (20, 26, 27, 44) de grandes dimensions et de masse importante. Lorsque la turbine (17) tourne, de tels couteaux (20, 26, 27, 44) ont, par leur inertie élevée, un effet de fléau particulièrement avantageux qui s'oppose efficacement aux efforts résistants générés par des produits denses et/ou humides. Chaque rangée de couteaux (20, 26, 27) est disposée entre le disque (18) et la tôle sommet (45) correspondante. Le au moins un premier couteau supplémentaire (44), notamment chaque premier couteau supplémentaire (44), est disposé entre une tôle sommet (45) et la première paroi (15) du carter (10).

De préférence, chaque premier couteau (26) est distant de la face frontale (22) respective d'une valeur nettement inférieure au pas (p). De préférence aussi, chaque dernier couteau (27) est distant du disque (18) d'une valeur nettement inférieure au pas (p). De cette manière, la rangée de couteaux (20, 26, 27) s'étend sur une grande largeur allant quasiment du disque (18) jusque à la face frontale (22), cette largeur correspondant sensiblement à celle de la pale (19) correspondante. Ainsi, les produits glissant le long de la pale (19) du centre de la turbine (17) vers sa périphérie, sont tous soumis à l'action de la rangée de couteaux (20, 26, 27).

De préférence, la distance, mesurée parallèlement à l'axe de rotation (21), entre le au moins un premier couteau supplémentaire (44) et un premier couteau (26), notamment entre chaque premier couteau supplémentaire (44) et chaque premier couteau (26) adjacent, est sensiblement égale au pas (p). De cette manière, le hachage produit par le premier couteau supplémentaire (44), notamment par chaque premier couteau supplémentaire (44), est homogène à celui généré par les autres couteaux (20, 26, 27).

Un espace d'une certaine largeur doit être respecté entre le disque (18) et la deuxième paroi (16) du carter (10), de manière à limiter la consommation de puissance de la machine (1) par retenue voire bourrage de produits dans cet espace, et à empêcher un corps étranger de petite taille tel qu'un caillou de venir se coincer dans cet espace. Selon une caractéristique avantageuse de l'invention, au moins un deuxième couteau supplémentaire (46), visible sur la figure 7, est disposé entre le disque (18) et la deuxième paroi (16) du carter (10). Ainsi, d'éventuels produits présents dans cet autre espace sont également coupés. La turbine (17) peut comporter une pluralité de deuxièmes couteaux supplémentaires (46).

De préférence, le au moins un deuxième couteau supplémentaire (46), notamment chaque deuxième couteau supplémentaire (46), est monté à pivotement sur l'axe de fixation (25) correspondant. Le au moins un deuxième couteau supplémentaire (46), notamment chaque deuxième couteau supplémentaire (46), peut donc, à l'instar des autres couteaux (20, 26, 27, 44), s'escamoter par pivotement autour de l'axe de fixation (25) lorsqu'il rencontre un obstacle.

De préférence, le au moins un deuxième couteau supplémentaire (46), notamment chaque deuxième couteau supplémentaire (46), est placé à une distance de la deuxième paroi (16) au moins égale au pas (p). Ainsi, les produits présents entre le disque (18) et la deuxième paroi (16) sont convenablement hachés et ne peuvent s'accumuler. La taille des produits éjectés par la goulotte (14) est plus homogène.

Tel que cela est représenté sur la figure 7, le au moins un deuxième couteau supplémentaire (46), notamment chaque deuxième couteau supplémentaire (46), est de préférence placé à une distance de la deuxième paroi (16) du carter (10) comprise entre une et deux fois le pas (p) entre les autres couteaux (20, 26, 27, 44).

La disposition des deux couteaux supplémentaires (44, 46) respectifs, par rapport aux parois (15, 16) respectives du carter (10), autorise un hachage des produits sur une grande largeur presque égale à celle du carter (10).

De préférence, la distance, mesurée parallèlement à l'axe de rotation (21), entre le au moins un deuxième couteau supplémentaire (46) et le dernier couteau (27), notamment entre chaque deuxième couteau supplémentaire (46) et chaque dernier couteau (27) adjacent, est sensiblement égale au pas (p). De cette manière, le hachage produit par le deuxième couteau supplémentaire (46), notamment par chaque deuxième couteau supplémentaire (46), est homogène à celui généré par les autres couteaux (20, 26, 27, 44).

Il ressort notamment de la figure 7 que chaque axe de fixation (25) porte un grand nombre de couteaux (20, 26, 27, 44, 46), de préférence neuf à douze couteaux. Dans l'exemple des figures, chaque axe de fixation (25) porte onze couteaux, dont neuf forment la rangée de couteaux (20, 26, 27) s'étendant entre le disque (18) et la tôle sommet (45). De cette manière, le hachage des produits est rapide et régulier.

De préférence, les couteaux (20, 26, 27) d'au moins une rangée de couteaux, notamment de chaque rangée de couteaux (20, 26, 27), sont séparés par des entretoises (51) montées à pivotement sur l'axe de fixation (25) et visibles sur la figure 7. Ces entretoises (51) réduisent la section libre entre les couteaux (20, 26, 27) et augmentent donc la vitesse du flux d'air généré par la turbine (17) en rotation. Les produits sont éjectés de la machine (1) sur une distance plus grande.

De préférence, une longueur de chaque entretoise (51), mesurée suivant une direction sensiblement radiale du disque (18), est sensiblement égale à la moitié d'une longueur des couteaux (20, 26, 27) mesurée suivant la même direction.

La turbine (17) comporte une plaque (48). La plaque (48) est voisine de l'ouverture (11). La plaque (48) est distante du disque (18). La plaque (48) comprend une plaque centrale (49). La plaque centrale (49) est distante du disque (18). La plaque centrale (49) est voisine de l'ouverture (11). La plaque centrale (49) est liée aux pales (19). Lors d'une rotation de la turbine (17) autour de l'axe de rotation (21), les produits venant de la benne (2) et franchissant l'ouverture (11) de la première paroi (15), viennent en contact avec la plaque centrale (49) depuis laquelle, ensuite, au moins une partie d'entre eux se déplace le long des pales (19) radialement en direction de la périphérie de la turbine. Egalement, une partie des produits venant de la benne (2) et venant en contact avec la plaque centrale (49), se répartit et se déplace radialement au moins entre deux pales (19) adjacentes.

La turbine (17) comporte également au moins une branche (50). Cette au moins une branche (50) est distante du disque (18). Elle comporte la face frontale (22) d'une pale (19). Ladite au moins une branche (50) s'étend depuis une périphérie de la plaque centrale (49). La périphérie de la plaque centrale (49) se définit comme une ligne circulaire ou globalement circulaire formant le contour extérieur de la plaque centrale (49). Ladite au moins une branche (50) naît au niveau de cette ligne. La plaque centrale (49) est alors liée à la pale (19) dont la face frontale (22) appartient à ladite au moins une branche (50).

Selon une caractéristique avantageuse de l'invention, ladite au moins une branche (50) s'étend en direction du au moins un premier couteau supplémentaire (44).

La plaque (48) comprend ladite au moins une branche (50). Dans l'exemple de réalisation des figures, la plaque (48) comprend une pluralité de branches (50). Dans ce cas, chaque branche (50) comporte la face frontale (22) d'une pale (19) respective. Chaque branche (50) s'étend depuis la périphérie de la plaque centrale (49) voisine de l'ouverture (11), distante du disque (18) et liée à la pale (19) dont la face frontale (22) appartient à cette branche (50). Chaque branche (50) s'étend en direction d'un premier couteau supplémentaire (44) respectif depuis la périphérie de la plaque centrale (49).

Selon une caractéristique avantageuse de l'invention, ledit au moins un premier couteau supplémentaire (44) est placé, suivant l'axe de rotation (21), sensiblement dans le prolongement d'une rangée de couteaux (20).

La plaque centrale (49) et ladite au moins une branche (50), notamment ladite pluralité de branches (50), forment une seule et même plaque (48). Ainsi, ladite au moins une branche (50), notamment chaque branche (50), est placée dans la continuité de la plaque centrale (49), et les produits peuvent aisément glisser de la plaque centrale (49) vers ladite au moins une branche (50), notamment vers chaque branche (50), lorsque la turbine tourne, sans rester accrochés en quelque endroit.

Ainsi qu'il ressort des figures 5 à 7, la plaque centrale (49) et le disque (18) sont liés à la pièce centrale portant l'axe de rotation (21), à distance l'un de l'autre suivant ledit axe de rotation (21). Cette liaison de la plaque centrale (49) et du disque (18) à la pièce centrale améliore la rigidité de la turbine (17). De plus, les efforts exercés par les couteaux (20, 26, 27, 44, 46) sur la turbine sont repris sur une plus grande longueur de l'axe de rotation (21). La présence d'un nombre important de couteaux de grandes dimensions, notamment du au moins un premier couteau supplémentaire (44) placé en net porte-à-faux du disque (18), ne se fait donc pas au détriment de la solidité de la turbine (17).

Suivant une caractéristique importante de l'invention, la plaque centrale (49) est disposée, suivant l'axe de rotation (21), en retrait des faces frontales (22) des pales (19). De la sorte, la plaque (48) a, vue depuis l'ouverture (11), une forme sensiblement concave. De cette manière, une quantité importante de produits peut pénétrer dans le carter (10) et arriver au centre de la turbine (17), d'où elle se répartit ensuite le long des pales (19) en rotation. Combinée à la grande largeur de hachage, cette caractéristique permet à la machine (1) de hacher un débit important de produits avec une qualité de hachage sensiblement égale sur toute la largeur du carter (10) de turbine (17) dans lequel se répartissent les produits.

En particulier, une distance extérieure entre la face frontale (22) d'une pale (19) et le disque (18) est au moins sensiblement deux fois plus longue qu'une distance intérieure séparant la plaque centrale (49) du disque (18).

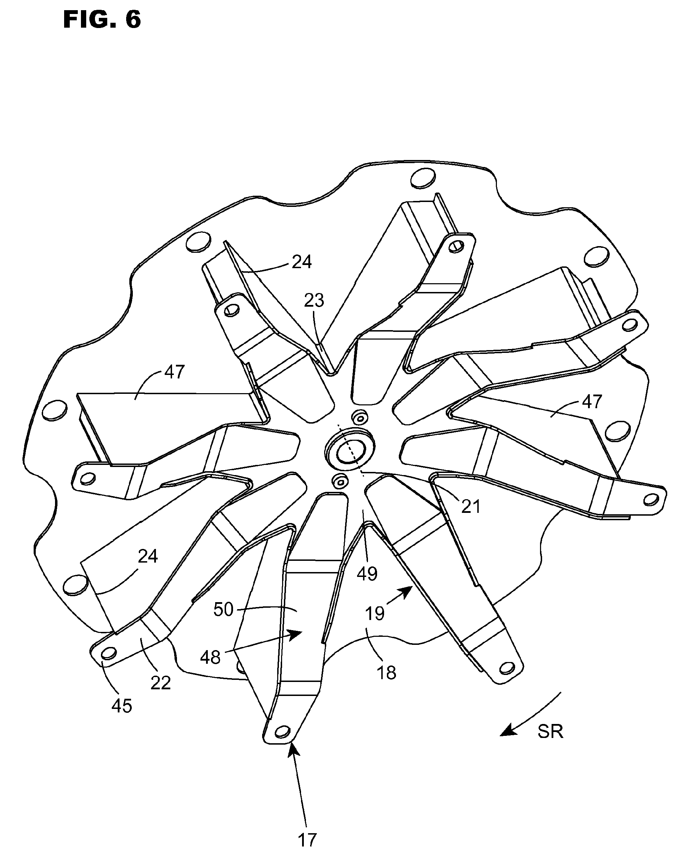

Telle qu'illustrée notamment par les figures 5 et 6, au moins une pale (19), notamment chaque pale (19), comporte au moins une tôle latérale de fermeture (47) qui s'étend du côté intérieur (23) voisin de l'axe de rotation (21) jusqu'au côté extérieur (24) voisin des couteaux (20, 26, 27) et reliant la face frontale (22) correspondante au disque (18). La distance extérieure séparant cette face frontale (22) du disque (18) correspond alors à la longueur du côté extérieur (24), tandis que la distance intérieure séparant la plaque centrale (49) du disque (18) correspond à la longueur du côté intérieur (23). Il ressort notamment des figures qu'au moins une tôle latérale de fermeture (47), notamment que chaque tôle de fermeture (47), a une forme globalement en trapèze s'élargissant en allant de l'axe de rotation (21) vers l'axe de fixation (25) des couteaux (20, 26, 27, 44, 46). La pale (19), notamment chaque pale (19), ainsi obtenue, est de forte section et permet de souffler et d'éjecter les produits à travers la goulotte (14) à une grande distance de la machine (1).

Selon une caractéristique particulièrement avantageuse de l'invention, la périphérie de la plaque centrale (49) est reliée au disque (18) par un côté intérieur (23), notamment par chaque côté intérieur (23). Ceci signifie qu'une tôle latérale de fermeture (47), notamment chaque tôle latérale de fermeture (47), naît au niveau de la périphérie de la plaque centrale (49). De la sorte, les produits arrivant au centre de la turbine (17) et glissant le long de ladite tôle latérale de fermeture (47), notamment le long de chaque tôle latérale de fermeture (47), passent aisément de la plaque centrale (49) vers ladite ou lesdites tôles latérales de fermeture (47). De plus, des produits ne peuvent pas s'accumuler entre la plaque frontale (49) et le disque (18). On relèvera sur la figure 6 que deux tôles latérales de fermeture (47) adjacentes de deux pales (19) consécutives, se rejoignent l'une et l'autre par leurs côtés intérieurs (23) respectifs.

Selon une caractéristique importante de l'invention, au moins une branche (50) s'étend le long d'au moins une tôle latérale de fermeture (47) correspondante depuis la plaque centrale (49). La pale (19) correspondante est formée par cette branche (50) et par cette au moins une tôle latérale de fermeture (47). Dans l'exemple de réalisation illustré notamment par la figure 6, chaque branche (50) s'étend le long d'au moins la tôle latérale de fermeture (47) correspondante depuis la plaque centrale (49). De plus, chaque pale (19) est formée par ladite branche (50) respective et ladite au moins une tôle latérale de fermeture (47) respective. Comme chaque branche (50) de la plaque (48) recouvre la tôle latérale de fermeture (47) correspondante, dont elle suit la forme plus ou moins trapézoïdale, les produits arrivant au niveau de la plaque centrale (49) de la turbine (17) peuvent aisément glisser le long des branches (50) en direction de l'espace situé entre la face frontale (22) des branches (50) et la première paroi (15) du carter (10), notamment en direction du ou des premiers couteaux supplémentaires (44).

Au moins une branche (50), notamment chaque branche (50), est reliée au disque (18) par deux tôles latérales de fermeture (47) pour former un caisson. La pale (19) correspondante, notamment chaque pale (19), est alors formée par ce caisson. La pale (19), notamment chaque pale (19), ainsi obtenue, est d'une grande rigidité. Cette rigidité permet à la pale (19), notamment à chaque pale (19), d'encaisser avec une déformation minime, des efforts importants générés par le hachage de produits denses et/ou humides, ainsi que ceux induits par l'inertie des nombreux couteaux (20, 26, 27, 44, 46) de grandes dimensions. La turbine (17) dans son ensemble est aussi d'une grande rigidité. Celle-ci est rendue nécessaire par les nombreux couteaux (20, 26, 27, 44, 46) de grandes dimensions et par la grande largeur de hachage qui génère des efforts importants sur la turbine (17) pendant le travail.

L'orifice de sortie (12) du carter (10), représenté sur la figure 5, est délimité par la première paroi (15), la deuxième paroi (16) et une tôle de recyclage (52) des produits. Cette tôle de recyclage (52) comporte une extrémité inférieure (53) et une extrémité supérieure (54). L'extrémité inférieure (53) est proche d'une trajectoire des couteaux (20, 26, 27, 44, 46) autour de l'axe de rotation (21). L'extrémité supérieure (54) est éloignée de ladite trajectoire. Au cours d'une révolution de la turbine (17), une partie des produits, plus légère et/ou suffisamment hachée, est éjectée à travers l'orifice de sortie (12). L'autre partie, plus dense et/ou insuffisamment hachée, retombe entre les couteaux (20, 26, 27, 44, 46) et la tôle de recyclage (52) au lieu d'être éjectée. La disposition des extrémités inférieure (53) et supérieure (54), par rapport à la trajectoire des couteaux (20, 26, 27, 44, 46), donne un effet d'entonnoir qui force les produits à être repris par les couteaux (20, 26, 27, 44, 46) jusqu'à être suffisamment légers et/ou hachés en brins assez courts pour être éjectés. De fait, cette tôle de recyclage (52) réduit le risque d'accumulation des produits les plus denses au niveau de l'orifice de sortie (12) et contribue à un hachage homogène de tous les produits introduits dans le carter (10).

De préférence, l'extrémité supérieure (54) de la tôle de recyclage (52) est raccordée à la goulotte d'éjection (14) des produits. Ainsi, les produits qui franchissent l'orifice de sortie (12) pénètrent dans la goulotte d'éjection (14) pour être distribués par exemple sous forme de litière ou de fourrage.

Selon une caractéristique avantageuse de l'invention qui ressort de la figure 5, une première tôle de guidage (55) est adossée à la première paroi (15) du carter (10). La première tôle de guidage (55) est disposée entre la turbine (17) et l'orifice de sortie (12) du carter (10). La fonction de cette tôle de guidage (55) est d'empêcher les produits venant de la benne (2), et franchissant l'ouverture (11) du carter (10), d'être éjectés sans avoir été au préalable repris par la turbine (17) pour être hachés. Dans ce but, cette première tôle de guidage (55) a une dimension, mesurée suivant l'axe de rotation (21), sensiblement égale au pas (p) entre les couteaux (20, 26, 27, 44, 46). Elle ne limite pas le débit des produits.

De manière similaire, une deuxième tôle de guidage (56) est avantageusement adossée à la deuxième paroi (16) du carter (10). La deuxième tôle de guidage (56) est disposée entre la turbine (17) et l'orifice de sortie (12) du carter (10) et a une dimension, mesurée suivant l'axe de rotation (21), au moins égale au pas (p) entre les couteaux (20, 26, 27, 44, 46). De cette manière, la distance séparant les deux tôles de guidage (55, 56) est sensiblement égale à la distance séparant les deux couteaux supplémentaires (44, 46). Les deux tôles de guidage (55, 56) ne limitent pas le débit des produits hachés venant à être éjectés.

De préférence, la première tôle de guidage (55) et/ou la deuxième tôle de guidage (56) ont un rayon de courbure légèrement supérieur au rayon de la trajectoire des couteaux (20, 26, 27, 44, 46) autour de l'axe de rotation (21). Ainsi, les deux tôles de guidage (55, 56) suivent la trajectoire des couteaux (20, 26, 27, 44, 46) à faible distance de ces derniers, empêchant des produits de passer entre lesdites tôles (55, 56) et les couteaux (20, 26, 27, 44, 46).

La première tôle de guidage (55) et la deuxième tôle de guidage (56) présentent chacune une portion inférieure (57). Les portions inférieures (57) respectives peuvent être reliées par une tôle horizontale (58), visible sur la figure 5, qui permet de ralentir les brins longs afin qu'ils tombent entre la turbine (17) et la tôle de recyclage (52). De cette manière, ils sont hachés jusqu'à être suffisamment courts.

Chaque rangée de couteaux (20, 26, 27) et les premier et deuxième couteaux supplémentaires (44, 46) coopèrent avec les contre-couteaux (28, 29), et notamment avec le contre-couteau réglable (29) représenté sur la figure 5. Le réglage de celui-ci est opéré au moyen d'un dispositif de réglage (59). Ce dernier peut être manuel, ou comprendre un vérin hydraulique articulé au carter (10) et relié à une centrale de commande à distance de la machine (1). Ledit vérin est relié au moyen de conduits au dispositif hydraulique du tracteur (5). La centrale de commande peut être déportée dans la cabine du tracteur (5) à partir de laquelle la position du contre-couteau réglable (29) peut être ajustée. En fonction des produits, l'utilisateur peut aisément faire varier la distance entre le contre-couteau réglable (29) et les couteaux (20, 26, 27, 44, 46) de la turbine (17), et ainsi déterminer l'intensité du hachage.

Au travail, la benne (2) peut être chargée de fourrage ou de paille en vrac ou sous forme de balles ou de blocs. Pour la distribution directe, la machine (1) est amenée sur le lieu de distribution au moyen du tracteur (5). Ensuite, la turbine (17) et le tambour démêleur (32) sont entraînés en rotation. Le tambour démêleur (32) tourne du bas vers le haut sur sa moitié arrière, c'est-à-dire dans le sens indiqué par la flèche (F). Lorsque la benne (2) est chargée avec une balle ou bien lorsque les produits sont denses et/ou humides, la paroi déflectrice (38) et les organes de retenue (37) sont rapprochés du tambour démêleur (32) dans la première position. Les couteaux (33) et les segments de spires (34) du tambour démêleur (32) détachent une certaine quantité de produits de la masse contenue dans la benne (2) et la font passer dans le carter (10). Les produits prélevés par le tambour démêleur (32) passent dans le passage entre ce dernier et la paroi déflectrice (38). Les organes de retenue (37) retiennent les produits dans la benne (2) et empêchent les gros paquets de produits d'accéder jusqu'à l'ouverture (11) du carter (10). Ces paquets glissent vers le haut le long des parties arrière de ces organes (37) et le long de l'écran (42) et retombent dans la benne (2). L'écartement entre les organes de retenue (37) est suffisant pour ne pas gêner le passage des produits correctement démêlés. Pendant la rotation du tambour démêleur (32), ses segments de spires (34) brassent et entraînent les produits en vue d'éviter la formation d'une voûte. Les produits arrivent ainsi de manière régulière à la turbine (17). En présence de paille ou de produits secs et légers, la paroi déflectrice (38) et les organes de retenue (37) sont éloignés du tambour démêleur (32) dans la deuxième position au moyen du système de réglage (41). Les produits ne sont alors plus arrêtés par les organes de retenue (37). Ils s'engouffrent dans le passage qui est plus ouvert entre le tambour démêleur (32) et la paroi déflectrice (38). Cette dernière dirige ces produits vers la moitié avant du tambour démêleur (32) où ils sont coupés par les couteaux (33), afin de pouvoir passer entre les extrémités avant des organes de retenue (37). Lesdits produits coupés parviennent alors jusqu'à la turbine (17). Celle-ci est en mesure de hacher avec homogénéité sur toute la largeur du carter (10), un volume important des différents produits cités précédemment, qui sont plus ou moins difficiles à travailler. La configuration du carter (10) avec la ou les tôles de guidage (55, 56), la tôle de recyclage (52) et la tôle horizontale (58) contribue à la qualité du hachage, notamment des produits denses et/ou à brins longs. La turbine (17) éjecte ensuite les produits recoupés à travers l'orifice de sortie (12). Les produits peuvent alors être dirigés à l'aide de la goulotte (14) vers les auges, lorsqu'il s'agit de fourrage ou vers les litières, lorsqu'il s'agit de paille. La goulotte (14) peut également être orientée de manière à former un tas de produits hachés en vue de leur incorporation ultérieure dans une machine telle qu'une mélangeuse. La machine (1) selon l'invention peut aussi être utilisée pour le paillage de lagunes ou la répartition de produits hachés au sol pour former une couverture. En dehors des première et deuxième positions de la paroi déflectrice (38), le système de réglage (41) peut également autoriser des positions intermédiaires en fonction de la nature des produits.

Pour mélanger, avant la distribution, différents produits chargés dans la benne (2), le tambour démêleur (32) et la turbine (17) sont entraînés en rotation comme cela a été décrit précédemment. La paroi déflectrice (38) est déplacée dans la deuxième position par pivotement autour de son axe (40) d'articulation au moyen du système de réglage (41). Les organes de retenue (37) pivotent avec ladite paroi (38) et se situent au-dessus de la moitié avant du tambour démêleur (32) et à une certaine distance au-dessus de la trajectoire des couteaux (33). Les paquets de produits ne sont alors plus arrêtés par les organes de retenue (37). Ils s'engouffrent dans le passage qui est plus ouvert entre le tambour démêleur (32) et la paroi déflectrice (38). Cette dernière dirige ces produits vers la moitié avant du tambour démêleur (32) où ils sont coupés par les couteaux (33) afin de pouvoir passer entre les organes de retenue (37). L'écran (42) empêche la projection des produits vers le haut et les guide vers le passage entre la paroi déflectrice (38) et le tambour démêleur (32). Lesdits produits coupés parviennent alors jusqu'à la turbine (17) qui les éjecte par la goulotte (14), laquelle est orientée vers l'arrière, afin qu'ils retombent dans la benne (2) et se mélangent. Ces produits peuvent ainsi subir deux ou trois passages par le tambour démêleur (32) et la turbine (17), de sorte à obtenir un mélange parfaitement homogène. Ensuite, l'orientation de la goulotte (14) peut être modifiée pour projeter les produits dans les auges.

En fonction de la position du contre-couteau réglable (29), la machine (1) peut hacher de la paille en brins courts de trois à cinq centimètres, broyer du produit difficile tel que de la paille humide ou du foin en brins longs de cinq à dix centimètres, ou encore éjecter les produits pratiquement sans les recouper.

Il est bien évident que l'invention n'est pas limitée à l'exemple de réalisation décrit ci-dessus et représenté sur les figures annexées. Des modifications restent possible dans la limite définie par les revendications.

## Revendications

1. Machine (1) de distribution de produits pour l'alimentation ou la formation de litière pour les animaux, comportant une benne (2) avec une ouverture (11) pour le passage des produits vers un carter (10) comportant une première paroi (15) percée de l'ouverture (11) et une deuxième paroi (16) entre lesquelles est montée une turbine (17) pouvant tourner autour d'un axe de rotation (21), la turbine (17) comportant un disque (18) avec des rangées de couteaux (20) et des pales (19) orientées suivant une direction sensiblement radiale du disque (18) et s'étendant chacune depuis le disque (18) jusqu'à une face frontale (22) respective voisine de l'ouverture (11), au moins une rangée de couteaux (20) s'étendant entre le disque (18) et la face frontale (22) d'une pale (19) et étant disposée en prolongement de cette pale (19), ladite au moins une rangée de couteaux (20) comportant un premier couteau (26) voisin de la face frontale (22) et un dernier couteau (27) voisin du disque (18), au moins un premier couteau supplémentaire (44) étant disposé entre la face frontale (22) d'une pale (19) et la première paroi (15) du carter (10), la turbine (17) comportant au moins une branche (50) comportant la face frontale (22) d'une pale (19), ***caractérisée en ce que*** ladite au moins une branche (50) s'étend depuis une périphérie d'une plaque centrale (49) voisine de l'ouverture (11), distante du disque (18) et liée à la pale (19) dont la face frontale (22) appartient à ladite au moins une branche (50).

2. Machine de distribution selon la revendication 1, ***caractérisée en ce que*** ladite au moins une branche (50) s'étend en direction dudit au moins un premier couteau supplémentaire (44).

3. Machine de distribution selon la revendication 1 ou 2, ***caractérisée en ce que*** ledit au moins un premier couteau supplémentaire (44) est placé, suivant l'axe de rotation (21), sensiblement dans le prolongement d'une rangée de couteaux (20).

4. Machine de distribution selon l'une quelconque des revendications 1 à 3, ***caractérisée en ce que*** chaque rangée de couteaux (20) s'étend entre le disque (18) et la face frontale (22) d'une pale (19) respective et est disposée en prolongement de cette pale (19) respective, et que chaque rangée de couteaux (20) comporte un premier couteau (26) voisin de la face frontale (22) respective et un dernier couteau (27) voisin du disque (18).

5. Machine de distribution selon la revendication 1 ou 4, ***caractérisée en ce que*** ladite au moins une / chaque rangée de couteaux (20) est montée à pivotement sur un axe de fixation (25) lié au disque (18) et disposé en prolongement d'une pale (19).

6. Machine de distribution selon l'une quelconque des revendications 1 à 5, ***caractérisée en ce que*** la plaque centrale (49) et ladite au moins une branche (50) forment une seule et même plaque (48).

7. Machine de distribution selon la revendication 6, ***caractérisée en ce que*** la plaque (48) est elle-même distante du disque (18).

8. Machine de distribution selon l'une quelconque des revendications 1 à 7, ***caractérisée en ce que*** l'axe de rotation (21) de la turbine (17) est porté par une pièce centrale à laquelle la plaque centrale (49) et le disque (18) sont liés à distance l'un de l'autre suivant ledit axe de rotation (21).

9. Machine de distribution selon l'une quelconque des revendications 1 à 8, ***caractérisée en ce que*** la plaque centrale (49) est disposée, suivant l'axe de rotation (21), en retrait des faces frontales (22) des pales (19), de sorte que, vue depuis l'ouverture (11), la plaque (48) ait une forme sensiblement concave.

10. Machine de distribution selon la revendication 9, ***caractérisée en ce qu***'une distance extérieure entre la face frontale (22) d'une pale (19) et le disque (18) est au moins sensiblement deux fois plus longue qu'une distance intérieure séparant la plaque centrale (49) du disque (18).

11. Machine de distribution selon l'une quelconque des revendications 1 à 10, ***caractérisée en ce que*** au moins une pale (19) comporte au moins une tôle latérale de fermeture (47) qui s'étend d'un côté intérieur (23) voisin de l'axe de rotation (21) jusqu'à un côté extérieur (24) voisin des couteaux (20, 26, 27) et reliant la face frontale (22) correspondante au disque (18).

12. Machine de distribution selon la revendication 11, ***caractérisée en ce que*** la périphérie de la plaque centrale (49) est reliée au disque (18) par ledit côté intérieur (23).

13. Machine de distribution selon la revendication 11, ***caractérisée en ce qu*'**une branche (50) s'étend le long de ladite au moins une tôle latérale de fermeture (47) depuis la plaque centrale (49), et que ladite au moins une pale (19) est formée par ladite branche (50) et par ladite au moins une tôle latérale de fermeture (47).

14. Machine de distribution selon la revendication 1, ***caractérisée en ce que*** les couteaux (20) de chaque rangée de couteaux (20) sont séparés d'un certain pas (p) les uns des autres, et que la turbine (17) comporte une pluralité de premiers couteaux supplémentaires (44) placés chacun à une distance de la première paroi (15) sensiblement égale au pas (p).

15. Machine de distribution selon les revendications 1 et 14, ***caractérisée en ce que*** la plaque (48) possède une pluralité de branches (50) s'étendant chacune depuis la périphérie de la plaque centrale (49) en direction d'un premier couteau supplémentaire (44) respectif.

16. Machine de distribution selon la revendication 15, ***caractérisée en ce que*** chaque branche (50) s'étend le long d'au moins la tôle latérale de fermeture (47) correspondante depuis la plaque centrale (49), et que chaque pale (19) est formée par ladite branche (50) respective et ladite au moins une tôle latérale de fermeture (47) respective.

17. Machine de distribution selon la revendication 13 ou 16, ***caractérisée en ce que*** la branche (50) est reliée au disque (18) par deux tôles latérales de fermeture (47) pour former un caisson, et que la pale (19) de la turbine (17) est formée par ledit caisson.

18. Machine de distribution selon l'une quelconque des revendications 1 à 17, ***caractérisée en ce qu'***au moins un deuxième couteau supplémentaire (46) est disposé entre le disque (18) et la deuxième paroi (16) du carter (10).

19. Machine de distribution selon l'une quelconque des revendications 1 à 18, ***caractérisée en ce que*** les couteaux (20, 26, 27) d'au moins une rangée de couteaux sont séparés par des entretoises (51), et qu'une longueur de chaque entretoise (51) mesurée suivant une direction sensiblement radiale du disque (18), est sensiblement égale à la moitié d'une longueur des couteaux (20, 26, 27) mesurée suivant la même direction.

## Patentansprüche

1. Maschine (1) zur Verteilung von Produkten für die Fütterung oder die Bildung von Einstreu für Tiere mit einem Behälter (2) mit einer Öffnung (11) zum Durchfliessen der Produkte zu einem Gehäuse (10), dass eine durch die Öffnung (11) durchbohrte erste Wand (15) und eine zweite Wand (16) umfasst, zwischen welchen eine Turbine (17) angebracht ist, die um eine Drehachse (21) drehen kann, wobei die Turbine (17) eine Scheibe (18) mit Reihen von Messern (20) und Flügel (19) umfasst, die gemäss einer im Wesentlichen radialen Richtung der Scheibe (18) ausgerichtet sind und sich jeweils von der Scheibe (18) aus bis zu einer jeweiligen der Öffnung (11) benachbarten Stirnfläche (22) erstrecken, wobei mindestens eine Reihe von Messern (20) sich zwischen der Scheibe (18) und der Stirnfläche (22) eines Flügels (19) erstreckt und in der Verlängerung dieses Flügels (19) angebracht ist, wobei die mindestens eine Reihe von Messern (20) ein der Stirnfläche (22) benachbartes erstes Messer (26) und ein der Scheibe (18) benachbartes letztes Messer (27) umfasst, wobei mindestens ein erstes zusätzliches Messer (44) zwischen der Stirnfläche (22) eines Flügels (19) und der ersten Wand (15) des Gehäuses (10) angebracht ist, wobei die Turbine (17) mindestens einen Arm (50) umfasst, der die Stirnfläche (22) eines Flügels (19) umfasst, ***dadurch gekennzeichnet*, dass** der mindestens eine Arm (50) sich von einem Umfang einer der Öffnung (11) benachbarten Mittelplatte (49) erstreckt, die von der Scheibe (18) entfernt ist und mit dem Flügel (19), dessen Stirnfläche (22) dem mindestens einen Arm (50) gehört, verbunden ist.

2. Verteilungsmaschine nach Anspruch 1, ***dadurch gekennzeichnet*, dass** der mindestens eine Arm (50) sich in Richtung des mindestens einen ersten zusätzlichen Messers (44) erstreckt.

3. Verteilungsmaschine nach Anspruch 1 oder 2, ***dadurch gekennzeichnet*, dass** das mindestens eine erste zusätzliche Messer (44), gemäss der Drehachse (21), im Wesentlichen in der Verlängerung einer Reihe von Messern (20) platziert ist.

4. Verteilungsmaschine nach irgend einem der Ansprüche 1 bis 3, ***dadurch gekennzeichnet*, dass** jede Reihe von Messern (20) sich zwischen der Scheibe (18) und der Stirnfläche (22) eines jeweiligen Flügels (19) erstreckt und in der Verlängerung dieses jeweiligen Flügels (9) angebracht ist, und dass jede Reihe von Messern (20) ein erstes der jeweiligen Stirnfläche (22) benachbartes erstes Messer (26) und ein der Scheibe (18) benachbartes letztes Messer (27) umfasst.

5. Verteilungsmaschine nach Anspruch 1 oder 4, ***dadurch gekennzeichnet*, dass** die mindestens eine/jede Reihe von Messern (20) drehbar an einer Befestigungsachse (25) angebracht ist, die mit der Scheibe (18) verbunden und in der Verlängerung eines Flügels (19) angebracht ist.

6. Verteilungsmaschine nach irgend einem der Ansprüche 1 bis 5, ***dadurch gekennzeichnet*, dass** die Mittelplatte (49) und der mindestens eine Arm (50) eine einzige und die gleiche Platte (48) bilden.

7. Verteilungsmaschine nach Anspruch 6, ***dadurch gekennzeichnet*, dass** die Platte (48) ihrerseits von der Scheibe (18) entfernt ist.

8. Verteilungsmaschine nach irgend einem der Ansprüche 1 bis 7, ***dadurch gekennzeichnet*, dass** die Drehachse (21) der Turbine (17) von einem Mittelteil getragen wird, mit welchem die Mittelplatte (49) und die Scheibe (18) entlang der Drehachse (21) voneinander beabstandet verbunden sind.

9. Verteilungsmaschine nach irgend einem der Ansprüche 1 bis 8, ***dadurch gekennzeichnet*, dass** die Mittelplatte (49) entlang der Drehachse (21) abseits gelegen der Stirnflächen (22) der Flügel (19) angebracht ist, sodass von der Öffnung (11) aus gesehen die Platte (48) eine im wesentlichen konkave Form aufweist.

10. Verteilungsmaschine nach Anspruch 9, ***dadurch gekennzeichnet*, dass** ein Aussenabstand zwischen der Stirnfläche (22) eines Flügels (19) und der Scheibe (18) mindestens im Wesentlichen zwei Mal länger ist als ein Innenabstand, der die Mittelplatte (49) von der Scheibe (18) trennt.

11. Verteilungsmaschine nach irgend einem der Ansprüche 1 bis 10, ***dadurch gekennzeichnet,* dass** mindestens ein Flügel (19) mindestens ein seitliches Verschlussblech (47) umfasst, das sich von einer der Drehachse (23) benachbarten Innenseite (23) aus zu einer den Messern (20, 26, 27) benachbarten Aussenseite (24) erstreckt und die entsprechende Stirnfläche (22) mit der Scheibe (18) verbindet.

12. Verteilungsmaschine nach Anspruch 11, ***dadurch gekennzeichnet*, dass** der Umfang der Mittelplatte (49) mittels der Innenseite (23) mit der Scheibe (18) verbunden ist.

13. Verteilungsmaschine nach Anspruch 11, ***dadurch gekennzeichnet*, dass** ein Arm (50) sich von der Mittelplatte (49) aus entlang des mindestens einen seitlichen Verschlussbleches (47) erstreckt, und dass der mindestens eine Flügel (19) durch den Arm (50) und durch das mindestens eine seitliche Verschlussblech (47) gebildet ist.

14. Verteilungsmaschine nach Anspruch 1, ***dadurch gekennzeichnet*, dass** die Messer (20) von jeder Reihe von Messern (20) gemäss einem gewissen Trennabstand (p) voneinander getrennt sind, und dass die Turbine (17) eine Vielfalt von ersten zusätzlichen Messern (44) umfasst, die jeweils in einem dem Abstand (p) im Wesentlichen gleichen Abstand von der ersten Wand (15) angebracht sind.

15. Verteilungsmaschine nach Ansprüche 1 und 14, ***dadurch gekennzeichnet*, dass** die Platte (48) eine Vielfalt von Armen (50) aufweist, die sich jeweils von dem Umfang der Mittelplatte (49) aus in Richtung eines jeweiligen ersten zusätzlichen Messer (44) erstrecken.

16. Verteilungsmaschine nach Anspruch 15, ***dadurch gekennzeichnet*, dass** jeder Arm (50) sich von der Mittelplatte (49) aus entlang des mindestens einen entsprechenden Verschlussbleches (47) erstreckt, und dass jeder Flügel (19) aus dem jeweiligen Arm (50) und dem mindestens einen jeweiligen seitlichen Verschlussblech (47) gebildet ist.

17. Verteilungsmaschine nach Anspruch 13 oder 16, ***dadurch gekennzeichnet*, dass** der Arm (50) mittels zwei seitlichen Verschlussbleche (47) mit der Scheibe (18) verbunden ist, um einen Kasten zu bilden, und dass der Flügel (19) der Turbine (17) durch den Kasten gebildet ist.

18. Verteilungsmaschine nach irgend einem der Ansprüche 1 bis 17, ***dadurch gekennzeichnet*, dass** mindestens ein zweites zusätzliches Messer (46) zwischen der Scheibe (18) und der zweiten Wand (16) des Gehäuses (10) angebracht ist.

19. Verteilungsmaschine nach irgend einem der Ansprüche 1 bis 18, ***dadurch gekennzeichnet*, dass** die Messer (20, 26, 27) von mindestens einer Reihe von Messern mittels Zwischenträger (51) getrennt sind, und dass eine Länge jedes Zwischenträgers (51), die entlang einer im Wesentlichen radialen Richtung der Scheibe (18) gemessen ist, im Wesentlichen gleich der hälfte einer Länge der Messer (20, 26, 27) ist, die entlang derselben Richtung gemessen ist.

## Claims

1. Machine (1) for the distribution of products for the feeding or bedding of animals, comprising a bucket (2) with an opening (11) for the passage of the products toward a casing (10) comprising a first wall (15) pierced by the opening (11) and a second wall (16) between which a turbine (17) is mounted that can rotate around a rotation axis (21), the turbine (17) comprising a disc (18) with rows of knives (20) and blades (19) oriented in a substantially radial direction of the disc (18) and each extending from the disc (18) to a respective front face (22) adjacent to the opening (11), at least one row of knives (20) extending between the disc (18) and the front face (22) of a blade (19) and being arranged in the extension of that blade (19), the said at least one row of knives (20) comprising a first knife (26) adjacent to the front face (22) and a last knife (27) adjacent to the disc (18), at least one additional first knife (44) being arranged between the front face (22) of a blade (19) and the first wall (15) of the casing (10), the turbine (17) comprising at least one branch (50) comprising the front face (22) of a blade (19), ***characterized in* that** the said at least one branch (50) extends from a periphery of a central plate (49) adjacent to the opening (11), remote from the disc (18) and connected to the blade (19) whose front face (22) belongs to the said at least one branch (50).

2. Distribution machine according to claim 1, ***characterized in* that** the said at least one branch (50) extends toward the said at least one additional first knife (44).

3. Distribution machine according to claim 1 or 2, ***characterized in* that** the said at least one additional first knife (44) is placed, along the rotation axis (21), substantially in the extension of a row of knives (20).

4. Distribution machine according to any one of claims 1 to 3, ***characterized in* that** each row of knives (20) extends between the disc (18) and the front face (22) of a respective blade (19) and is arranged in the extension of that respective blade (19), and **in that** each row of knives (20) comprises a first knife (26) adjacent to the respective front face (22) and a last knife (27) adjacent to the disc (18).

5. Distribution machine according to claim 1 or 4, ***characterized in* that** the said at least one / each row of knives (20) is pivotably mounted on a fastening axis (25) connected to the disc (18) and arranged in the extension of a blade (19).

6. Distribution machine according to any one of claims 1 to 5, ***characterized in* that** the central plate (49) and the said at least one branch (50) form a single and same plate (48).

7. Distribution machine according to claim 6, ***characterized in* that** the plate (48) is itself remote from the disc (18).

8. Distribution machine according to any one of claims 1 to 7, ***characterized in* that** the rotation axis (21) of the turbine (17) is carried by a central part to which the central plate (49) and the disc (18) are connected remote from each other along the said rotation axis (21).

9. Distribution machine according to any one of claims 1 to 8, ***characterized in* that** the central plate (49) is arranged, along the rotation axis (21), set back from the front faces (22) of the blades (19) such that, seen from the opening (11), the plate (48) has a substantially concave shape.

10. Distribution machine according to claim 9, ***characterized in* that** an outer distance between the front face (22) of a blade (19) and the disc (18) is at least substantially twice as long as an inner distance separating the central plate (49) from the disc (18).

11. Distribution machine according to any one of claims 1 to 10, ***characterized in* that** at least one blade (19) comprises at least one lateral closing sheet (47) that extends from an inner side (23) adjacent to the rotation axis (21) to an outer side (24) adjacent to the knives (20, 26, 27) and connecting the corresponding front face (22) to the disc (18).

12. Distribution machine according to claim 11, ***characterized in* that** the periphery of the central plate (49) is connected to the disc (18) by the said inner side (23).

13. Distribution machine according to claim 11, ***characterized in* that** a branch (50) extends along the said at least one lateral closing sheet (47) from the central plate (49), and **in that** the said at least one blade (19) is formed by the said branch (50) and by the said at least one lateral closing sheet (47).

14. Distribution machine according to claim 1, ***characterized in* that** the knives (20) of each row of knives (20) are separated from each other by a certain pitch (p), and that the turbine (17) comprises a plurality of additional first knives (44) each placed at a distance from the first wall (15) substantially equal to the pitch (p).

15. Distribution machine according to claims 1 and 14, ***characterized in* that** the plate (48) has a plurality of branches (50) each extending from the periphery of the central plate (49) toward a respective additional first knife (44).

16. Distribution machine according to claim 15, ***characterized in* that** each branch (50) extends along at least one corresponding lateral closing sheet (47) from the central plate (49), and **in that** each blade (19) is formed by the said respective branch (50) and by the said at least one respective lateral closing sheet (47).

17. Distribution machine according to claim 13 or 16, ***characterized in* that** the branch (50) is connected to the disc (18) by two lateral closing sheets (47) to form a bin, and **in that** the blade (19) of the turbine (17) is formed by the said bin.

18. Distribution machine according to any one of claims 1 to 17, ***characterized in* that** at least one additional second knife (46) is arranged between the disc (18) and the second wall (16) of the casing (10).

19. Distribution machine according to any one of claims 1 to 18, ***characterized in* that** the knives (20, 26, 27) of at least one row of knives are separated by spacers (51), and **in that** a length of each spacer (51), measured in a substantially radial direction of the disc (18), is substantially equal to half of a length of the knives (20, 26, 27) measured in the same direction.
